# EUROPÄISCHE PATENTSCHRIFT

(11) **EP 2 237 997 B1**
(45) Veröffentlichungstag und Bekanntmachung des Hinweises auf die Patenterteilung: **13.12.2017**
(21) Anmeldenummer: 08863048.8
(22) Anmeldetag: 23.10.2008
(51) Int. Cl.: B60S 1/04

(54) **BEFESTIGUNGSROHR SOWIE WISCHANLAGE**
ATTACHMENT PIPE AND WIPER SYSTEM
TUBE DE FIXATION ET SYSTÈME ESSUIE-GLACE

(30) Priorität: 19.12.2007 DE 102007061105
(43) Veröffentlichungstag der Anmeldung: 13.10.2010
(73) Patentinhaber: Robert Bosch GmbH, 70442 Stuttgart (DE)
(72) Erfinder: BOOS, Tino, 76532 Baden-Baden (DE); KRAUS, Achim, 77815 Buehl (DE)
(86) Internationale Anmeldenummer: PCT/EP2008/064361
(87) Internationale Veröffentlichungsnummer: WO 2009/077245

(56) Entgegenhaltungen:
- EP-A- 1 055 571
- EP-A- 1 939 055
- EP-A1- 2 195 213
- JP-U- S57 194 941
- US-A1- 2005 097 700
- US-B1- 6 343 403

## Beschreibung

### Stand der Technik

Die Erfindung betrifft eine Wischanlage für ein Kraftfahrzeug gemäß dein Oberbegriff des Anspruchs 1.

Bekannte Wischanlagen, insbesondere Frontwischanlagen, wie beispielsweise in der US6343403B1 gezeigt, weisen ein Befestigungsrohr auf, an dem ein Wischerantrieb, umfassend einen elektrischen Antriebsmotor und ein von diesem angetriebenes Getriebe, mit Hilfe von Befestigungsschrauben festgelegt ist. Da das Festlegen des Wischerantriebs an einem kreisförmig konturierten Befestigungsrohr mit Hilfe von Befestigungsschrauben nur aufwändig zu realisieren ist, ist das Befestigungsrohr von bekannten Wischanlagen in einen Befestigungsbereich derart verpresst, dass es eine U-förmige Querschnittskontur aufweist. Bei derartigen Befestigungsrohren liegen sämtliche einander gegenüberliegenden Rohrwandabschnitte im Bereich der U-förmigen Querschnittskontur unmittelbar aneinander an. Nachteilig bei den bekannten Wischanlagen ist die vergleichsweise geringe Torsionssteifigkeit des Befestigungsrohres im Befestigungsbereich.

Das Dokument EP 0 430 375 B1 schlägt zur Verbesserung der Steifigkeit vor, den rohrförmigen Träger im Befestigungsbereich mit einem trapezförmigen Querschnitt auszubilden, welcher einen oberen Wandabschnitt sowie einen im Wesentlichen parallel dazu verlaufenden unteren Wandabschnitt aufweist, und sich nach innen verjüngende Seitenwände. Durch die nach innen verlaufende Verjüngung neigt der Befestigungsabschnitt bei Biege- und Torsionsbeanspruchung jedoch zu einem Einknicken, was die Steifigkeit des Befestigungsprofils stark einschränkt.

Um diesen Nachteil zu verhindern, schlägt das Dokument DE 10 2006 058 740 A1 vor, den rohrförmigen Träger im Befestigungsbereich so auszubilden, dass er eine im Wesentlichen H-förmige Querschnittsfläche aufweist. Auf diese Weise ergibt sich eine stabilere und torsionssteifere Scheibenwischvorrichtung, die darüber hinaus wesentlich kostengünstiger sowie einfacher zu fertigen ist. Die Biege- und Torsionssteifigkeit wird durch die entsprechende H-förmige Ausbildung zwar verbessert, jedoch bilden die Seitenschenkel dieser Ausführungsform eine Schwachstelle bezüglich auftretender Torsionskräfte.

Aus der US6343403B1 ist eine Wischanlage gemäss dem Oberbegriff des Anspruchs 1 bekannt.

### Offenbarung der Erfindung

### Technische Aufgabe

Der Erfindung liegt die Aufgabe zugrunde, eine Wischanlage vorzuschlagen, deren Befestigungsrohr zum Einen eine einfache Befestigungsmöglichkeit für die Antriebseinheit bereit-

### Offenbarung der Erfindung

### Technische Aufgabe

Der Erfindung liegt die Aufgabe zugrunde, ein besonders biege- und torsionssteifes Befestigungsrohr zum Fixieren eines Wischerantriebs einer Wischanlage in einem Kraftfahrzeug vorzuschlagen. Ferner besteht die Aufgabe darin, eine Wischanlage mit einem entsprechend optimierten Befestigungsrohr vorzuschlagen.

### Technische Lösung

Diese Aufgabe wird hinsichtlich der Wischanlage mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, im Gegensatz zum Stand der Technik, bei dem das Querschnittsprofil des Befestigungsrohrs in seinem Befestigungsabschnitt zwei von einem Anlageschenkel ausgehende, parallel zueinander verlaufende Stützschenkel aufweist, die gemeinsam in einen ersten Raumabschnitt hineinragen, das Querschnittsprofil bei einem nach dem Konzept der Erfindung ausgebildeten Befestigungsrohr derart auszuformen, dass dieses nur einen einzigen, in den ersten Raumabschnitt hineinragenden Stützschenkel (erster Stützschenkel) aufweist. Dabei sieht die Erfindung vor, weitere von dem Anlageschenkel ausgehende Stützschenkel vorzusehen, die dann jedoch nicht in den ersten Raumabschnitt, sondern in den zweiten, durch den Anlageschenkel von dem ersten Raumabschnitt getrennten, Raumabschnitt hineinragen. Unter dem ersten und dem zweiten Raumabschnitt im Sinne der Erfindung sind dabei die gedachten Raumabschnitte zu verstehen, die an zwei voneinander abgewandten Seitenflächen (Flachseiten) des Anlageschenkels angrenzen. Anders ausgedrückt bildet der Anlageschenkel, bzw. bei einem ebenen Anlageschenkel eine den Anlageschenkel aufnehmenden Ebene, eine Grenze zwischen zwei Raumabschnitten, nämlich dem ersten Raumabschnitt und dem zweiten Raumabschnitt, wobei gemäß der Erfindung vorgesehen ist, dass lediglich ein einziger von dem Anlageschenkel ausgehender Stützschenkel in den ersten Raumabschnitt hineinragt. Bevorzugt ist eine Ausführungsform der Erfindung, bei der das Querschnittsprofil durch Verformen eines ursprünglich auch im Befestigungsabschnitt als Hohlrohr, insbesondere als Rundrohr, ausgebildeten Befestigungsrohres hergestellt ist. Mit Vorteil wird ein Befestigungsrohr, insbesondere nach dem Ablängen und ggf. einem Biegevorgang, zum Erhalten des Querschnittprofils im Befestigungsabschnitt mittels eines geeigneten Stempelwerkzeugs geprägt, insbesondere derart, dass der Anlageschenkel und/oder der erste Stützschenkel von jeweils zwei Umfangswandabschnitten gebildet wird/werden, der/die zumindest abschnittsweise aneinander anliegen. Die Biege- sowie Torsionssteifigkeit des vorgeschlagenen Befestigungsrohres ist im Befestigungsabschnitt im Vergleich zum Stand der Technik erhöht. Darüber hinaus kann auf in einem im Stand der Technik notwendigen Motorhalter verzichtet werden, da der Wischerantrieb (Wischermotor und/oder Getriebe, insbesondere Schneckengetriebe) mit seinem Wischerantriebsgehäuse, insbesondere mit einem Getriebegehäuseabschnitt, unmittelbar am Anlageschenkel des Befestigungsabschnittes festgeschraubt werden kann. Hieraus resultiert zum einen eine Reduzierung der benötigten Bauteile sowie eine erleichterte Montage der Wischeranlage.

In Weiterbildung der Erfindung ist mit Vorteil vorgesehen, dass der Anlageschenkel und der erste Stützschenkel, zumindest näherungsweise, rechtwinklig zueinander angeordnet sind. Auf diese Weise wird ein besonders biege- und torsionssteifes Befestigungsrohr erhalten. Besonders bevorzugt liegen, zumindest abschnittsweise, die den Anlageschenkel und/oder die den ersten Stützschenkel bildenden Umfangswandabschnitte des ursprünglich auch im Befestigungsabschnitt als Hohlrohr ausgebildeten Befestigungsrohres unmittelbar aneinander an.

Von besonderem Vorteil ist eine Ausführungsform, bei der das Querschnittsprofil des Befestigungsabschnittes zumindest näherungsweise L-förmig konturiert ist, also der erste Stützschenkel sich ausgehend von einem Endbereich des Anlageschenkels in den ersten Raumabschnitt, vorzugsweise zumindest näherungsweise, rechtwinklig hinein erstreckt. Dabei muss sich der erste Stützschenkel in der Einbaulage des Befestigungsrohrs nicht zwangsläufig in vertikaler Richtung erstrecken - unter einem L-förmigen Querschnittsprofil werden unter anderem auch beispielsweise liegende L-Formen, oder auf dem Kopf stehende L-Formen verstanden.

Besonders zweckmäßig ist eine Ausführungsform, bei der der erste Stützschenkel nicht der einzige sich von dem Anlageschenkel weg erstreckende Stützschenkel ist, sondern bei der ein zweiter Stützschenkel vorgesehen ist, der sich jedoch nicht in den ersten Raumabschnitt, sondern ausgehend von dem Anlageabschnitt in den zweiten Raumabschnitt hinein erstreckt.

Zur weiteren Erhöhung der Biege- und Torsionssteifigkeit ist eine Ausführungsform bevorzugt, bei der der zweite Stützschenkel zumindest näherungsweise senkrecht zum Anlageschenkel verläuft. Bevorzugt ist dabei eine Ausführungsform, bei der der zweite Stützschenkel an eines der beiden Enden des Anlageschenkels angrenzt bzw. von diesem ausgeht.

Durch das Vorsehen eines zweiten, sich in den zweiten Raumabschnitt hinein erstreckenden, Stützschenkels ist eine besonders bevorzugte Ausführungsform realisierbar, bei der das Querschnittsprofil zumindest näherungsweise T-förmig ausgebildet ist - die beiden Stützschenkel also einen gemeinsamen Querschenkel bilden, zu dem der Anlageschenkel, zumindest näherungsweise, senkrecht verläuft. Bevorzugt ist dabei eine spiegelsymmetrische Ausbildung zu einer gedachten, den Anlageschenkel aufnehmenden, Symmetrieebene. Unter einem T-förmigen Querschnittsprofil werden nicht nur Querschnittsprofile mit in der Einbaulage des Befestigungsrohres vertikal ausgerichtetem Anlageschenkel verstanden. Die T-Form kann jede Lage im dreidimensionalen Raum einnehmen.

Alternativ zu einer T-förmigen Ausbildung des Querschnittsprofils ist eine Ausführungsform realisierbar, bei der die beiden Stützschenkel nicht wie bei einem T-förmigen Querschnittsprofil an einem gemeinsamen Ende des Anlageschenkels angeordnet sind, sondern vielmehr ein, zumindest näherungsweise, Z-förmiges Querschnittsprofil im Befestigungsabschnitt des Befestigungsrohres realisiert wird, also ein Querschnittsprofil, bei dem die beiden sich in unterschiedliche Raumabschnitte erstreckenden Stützschenkel auf die beiden Enden des Anlageschenkels verteilt angeordnet sind. Zur weiteren Optimierung der Biege- und Torsionssteifigkeit ist erfindungsgemäss vorgesehen, dass die Umfangswandabschnitte bei zumindest einem Schenkel nicht über die gesamte Längserstreckung des Schenkels aneinander anliegen, sondern derart relativ zueinander angeordnet sind, dass von den Umfangswandabschnitten mindestens eine Hohlkammer umschlossen ist.

Bevorzugt ist die mindestens eine Hohlkammer dabei in einem Endbereich eines der Schenkel (Anlage- und/oder Stützschenkel) angeordnet. Bei einem L-förmig konturierten Befestigungsabschnitt befindet sich die Hohlkammer beispielsweise bevorzugt im Bereich des freien Endes des ersten Stützschenkels. Bei einem T-förmig konturierten Querschnittsprofil ist bevorzugt zusätzlich zu der Hohlkammer im Bereich des freien Endes des ersten Stützschenkels eine Hohlkammer im Übergangsbereich zwischen dem Anlageschenkel und den beiden, vorzugsweise miteinander fluchtenden, Stützschenkeln vorgesehen. Bei einem Z-förmig konturierten Querschnittsprofil ist eine Ausführungsform mit zwei Hohlkammern bevorzugt, wobei mit Vorteil eine der Hohlkammern im Bereich des freien Endes des ersten Stützschenkels und die zweite Hohlkammer im Bereich des freien Endes des zweiten Stützschenkels angeordnet sind.

Die Erfindung bezieht sich auf eine Wischanlage, bei der ein am Befestigungsabschnitt eines zuvor beschriebenen Befestigungsrohres ein Wischerantrieb festgelegt ist. Dabei liegt der Wischerantrieb, vorzugsweise ein Wischerantriebsgehäuse, besonders bevorzugt ein Getriebegehäuseabschnitt des Wischerantriebsgehäuses, unmittelbar am Anlageschenkel an, wobei eine Ausführungsform realisierbar ist, bei der der Wischerantrieb an der zum ersten Raumabschnitt hin orientierten Anlagefläche des Anlageschenkels angeordnet ist. Ebenso ist eine Ausführungsform realisierbar, bei der der Wischerantrieb an der dem zweiten Raumabschnitt zugewandten Anlagefläche des Anlageschenkels angeordnet ist. Letztere Ausführungsform ist bevorzugt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: in einer perspektivischen Teilansicht ein Befestigungsrohr mit einem Befestigungsabschnitt,
- Fig. 2:: eine vergrößerte Darstellung des Befestigungsabschnittes gemäß Fig. 1, wobei der Befestigungsabschnitt im Querschnitt L-förmig konturiert ist,
- Fig. 3:: ein alternatives Ausführungsbeispiel mit einem im Querschnitt T-förmig konturierten Befestigungsabschnitt,
- Fig. 4:: ein weiteres alternatives Ausführungsbeispiel mit einem im Querschnitt Z-förmig konturierten Befestigungsabschnitt und
- Fig. 5:: eine Wischeranlage mit einem am Befestigungsabschnitt des Befestigungsrohres gemäß Fig. 4 festgelegten Wischerantrieb.

### Ausführungsformen der Erfindung

In den Figuren sind gleiche Bauteile und Bauteile mit der gleichen Funktion mit den gleichen Bezugszeichen gekennzeichnet.

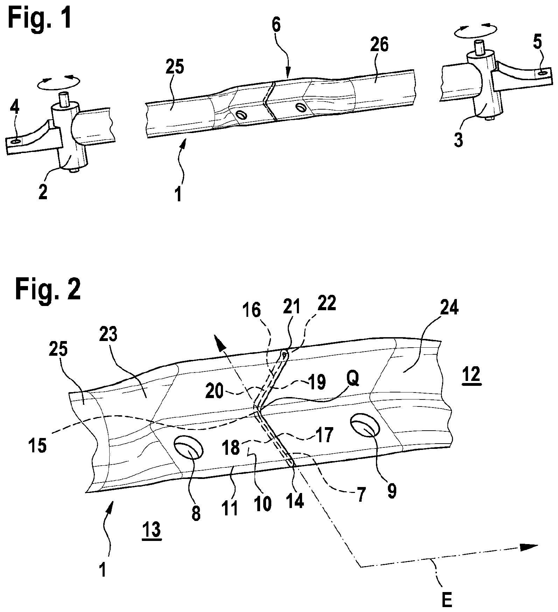

In Fig. 1 ist ein Befestigungsrohr 1 zum Festlegen eines nicht gezeigten Wischerantriebs an einer Fahrzeugkarosserie gezeigt. Das als Hohlrohr (hier Rundrohr) ausgebildete Befestigungsrohr 1 nimmt standardmäßig an mindestens einem Ende ein nicht gezeigtes Wischerlager 2, 3 auf, welches zum einen, beispielsweise über Fixieröffnungen 4, 5 zur Aufnahme von Fixierschrauben die Befestigung zur Karosserie ermöglicht und unter Mitwirkung der Wischanlagenkinematik die Wischbewegung bereitstellt.

Das Befestigungsrohr 1 umfasst einen durch Prägen erhaltenen Befestigungsabschnitt 6, mit dem der Wischerantrieb unmittelbar verschraubbar ist, ohne dass das Vorsehen einer separaten Befestigungsplatine notwendig wäre.

Mögliche Ausgestaltungsformen des Befestigungsabschnittes 6 werden im Folgenden anhand der Fig. 2 bis 4 im Detail erläutert.

Gemäß einem ersten, in Fig. 2 gezeigten Ausführungsbeispiel umfasst die Querschnittskontur Q des Befestigungsabschnittes 6 einen ebenen Anlageschenkel 7, der zwei in Längsrichtung des Befestigungsrohres 1 voneinander beabstandete Durchgangsöffnungen 8, 9 zur Aufnahme jeweils einer nicht gezeigten Befestigungsschraube zum Festlegen des Wischerantriebs aufweist. Die Durchgangsöffnungen 8, 9 verbinden dabei eine ersten Flachseite 10 des Anlageschenkels 7 mit einer von dieser abgewandten zweiten, in dem gezeigten Ausführungsbeispiel parallelen, Flachseite 11 (in Fig. 2 die Unterseite).

Der Anlageschenkel 7 bzw. eine diesen aufnehmende Ebene E trennt einen ersten Raumabschnitt 12 (in Fig. 2 ein oberer Raumabschnitt) von einem zweiten Raumabschnitt 13 (in Fig. 2 ein unterer Raumabschnitt). Dabei weist die erste Flachseite 10 in Richtung des ersten Raumabschnitts 12 und die dazu parallel verlaufende zweite Flachseite 11 in Richtung des zweiten Raumabschnitts 13.

Wie sich aus Fig. 2 ergibt, umfasst das Querschnittsprofil Q des Befestigungsabschnittes 6, neben dem sich in Querrichtung zwischen seinen zwei Enden 14, 15 erstreckenden Anlageschenkel 7, einen ersten Stützschenkel 16, der an das Ende 15, welches von dem freien Ende 14 beabstandet ist, angrenzt und sich rechtwinklig zum Anlageschenkel 7 in den ersten Raumabschnitt 12 hinein erstreckt. Hierdurch erhält das Querschnittsprofil Q eine L-Form. Wie sich weiter aus Fig. 2 ergibt, ist der Anlageschenkel 7 von zwei Umfangswandabschnitten 17, 18 des Befestigungsrohres 1 gebildet, die entlang des gesamten Anlageschenkels 7 aneinander anliegen, und die im Bereich des zweiten Endes 15 in Umfangswandabschnitte 19, 20 übergehen, die den ersten Stützschenkel 16 bilden. Die Umfangswandabschnitte 19, 20 sind nicht über die gesamte Längserstreckung des ersten Stützschenkels 16 aneinander anliegend angeordnet. Vielmehr weist der Umfangswandabschnitt 20 im Bereich eines freien Endes 21 des ersten Stützschenkels 16 eine gebogene Kontur auf und ist von dem gegenüberliegenden Umfangswandabschnitt 19 etwas beabstandet, so dass eine Hohlkammer 22 gebildet ist, die sich entlang der Längserstreckung des Befestigungsabschnittes 6 erstreckt.

Aus Fig. 2 ist weiter zu erkennen, dass der Befestigungsabschnitt 6 in einem Bereich außerhalb der Durchgangsöffnungen 8, 9 in jeweils einem Übergangsbereich 23, 24 in einen den Befestigungsabschnitt 6 angrenzenden Rundrohrabschnitt 25, 26 übergeht (vergleiche Fig. 1).

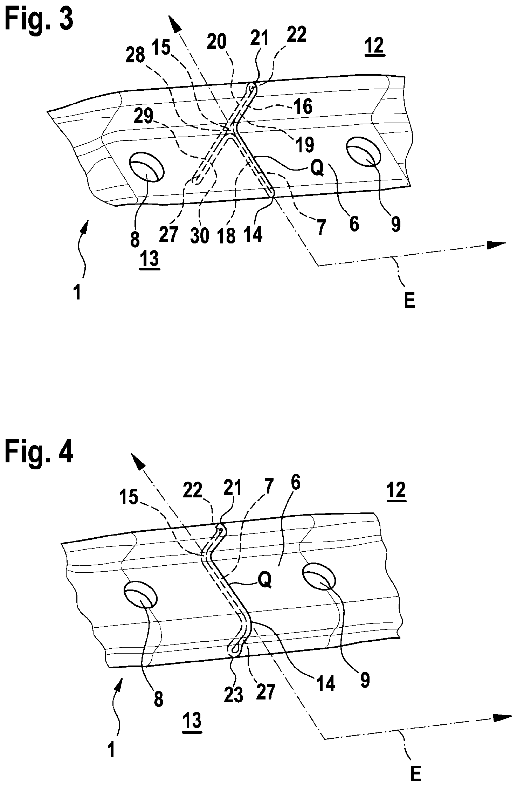

In Fig. 3 ist ein alternativ ausgebildeter Befestigungsabschnitt 6 des Befestigungsrohres 1 gezeigt. Zusätzlich zu dem Anlageschenkel 7, der sich zwischen seinen Enden 14, 15 erstreckt, und zusätzlich zu dem ersten, rechtwinklig zu dem Anlageschenkel 7 angeordneten, am Ende 15 anschließenden Stützschenkel 16, der in den ersten Raumabschnitt 12 hineinragt, umfasst das Querschnittsprofil Q einen zweiten an das Ende 15 des Anlageschenkels 7 angrenzenden Stützschenkel 27, der mit dem ersten Stützschenkel 16 entlang seiner Längserstreckung fluchtet, so dass sich ein T-förmiges Querschnittsprofil Q ergibt. Zusätzlich zu der Hohlkammer 22 im Bereich des freien Endes 21 des ersten Stützschenkels 16 umfasst das Querschnittsprofil Q eine weitere, sich in Längsrichtung des Befestigungsabschnittes 6 erstreckende Hohlkammer 28, die im Bereich des Endes 15 des Anlageschenkels 7, oder, anders ausgedrückt, im Übergangsbereich zu den beiden senkrecht zum Anlageschenkel 7 verlaufenden Stützschenkeln 16, 27, angeordnet ist. Der zweite Stützschenkel 27 erstreckt sich in eine der Erstreckungsrichtung des ersten Stützschenkels 16 unmittelbar entgegengesetzte Richtung in den zweiten Raumabschnitt 12 hinein und wird von zwei Umfangswandabschnitten 29, 30 gebildet, wobei der Umfangswandabschnitt 30, der rechtwinklig zu dem Umfangswandabschnitt 18 des Anlageschenkels 7 verläuft, im Bereich des Endes 15 des Anlageschenkels 7 in letzteren übergeht. Der Umfangsschenkel 29, der über den Größenabschnitt der Längserstreckung des zweiten Stützschenkels 27 am Umfangswandabschnitt 30 anliegt, geht an der Ebene E in den Umfangswandabschnitt 20 des ersten Stützschenkels 16 über.

Bei dem Ausführungsbeispiel gemäß Fig. 4 ist der zweite Stützschenkel 27 im Gegensatz zu dem Ausführungsbeispiel gemäß Fig. 3 nicht im Bereich des Endes 15 des Anlageschenkels 7 angeordnet, sondern schließt an das in Fig. 3 freie Ende 14 des Anlageabschnitts 7 an, so dass das Querschnittsprofil Q eine Z-Form erhält. Der zweite Stützschenkel 27 ist rechtwinklig zum Anlageabschnitt 7 angeordnet und erstreckt sich in den zweiten Raumabschnitt 12 hinein, wohingegen sich der erste Stützschenkel 16, wie bei den zuvor beschriebenen Ausführungsbeispielen, in den ersten Raumabschnitt 12 hinein erstreckt und im Bereich seines freien Endes 21 eine Hohlkammer 22 aufweist. Ebenso weist der zweite Stützschenkel 27 im Bereich seines freien Endes 31 eine Hohlkammer 28 auf, die sich wie die Hohlkammer 22 in Längsrichtung des Befestigungsabschnittes 6 des Befestigungsrohres 1 erstreckt.

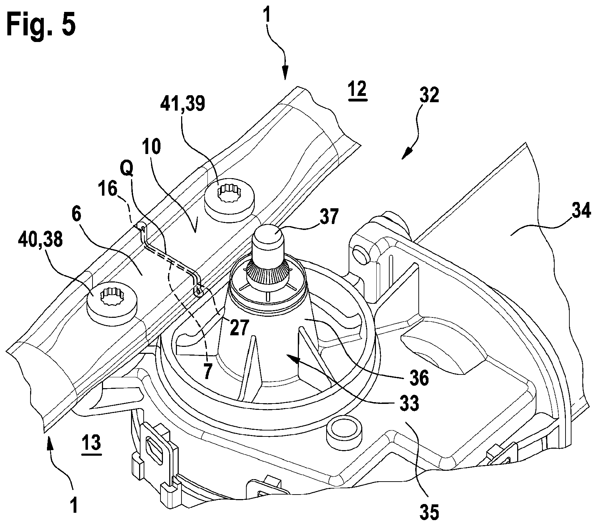

In Fig. 5 ist ausschnittsweise eine Wischanlage 32, umfassend einen Wischerantrieb 33, gezeigt. Der Wischerantrieb 33 umfasst einen in einem Motorgehäuse 34 angeordneten, nicht gezeigten Elektromotor, der ein ebenfalls nicht gezeigtes, in einem Getriebegehäuse 35 angeordnetes Getriebe antreibt. Das Motorgehäuse 34 und das Getriebegehäuse 35 bilden zusammen ein gemeinsames Wischerantriebsgehäuse 36. Aus dem Getriebegehäuse 35 ragt eine Abtriebswelle 37 heraus, an deren freien Ende eine nicht gezeigte Kurbelplatte eines ebenfalls nicht gezeigten, am Befestigungsrohr 1 festlegbaren Kurbelgestänges festlegbar ist.

Wie sich weiterhin aus Fig. 5 ergibt, liegt das Wischerantriebsgehäuse 36, genauer das Getriebegehäuse 35, auf der zweiten Flachseite 11, die zum zweiten Raumabschnitt 13 hin gerichtet ist, an. An der gegenüberliegenden ersten Flachseite 10 liegen Schraubenköpfe 38, 39 von die Durchgangslöcher 8, 9 durchsetzenden Befestigungsschrauben 40, 41 an, wobei die Befestigungsschrauben 40, 41 beispielsweise in nicht gezeigten Innengewindelöchern des Getriebegehäuses 35 aufgenommen oder mithilfe von Muttern auf der Außenseite des Getriebegehäuses 35 gekontert sind.

Zu erkennen ist weiterhin aus Fig. 5, dass das Querschnittsprofil Q im Befestigungsabschnitt 6 des nur ausschnittsweise dargestellten Befestigungsrohres 1 dem in Fig. 4 gezeigten Querschnittsprofil Q (Z-Form) entspricht. Alternativ kann die Querschnittskontur Q beispielsweise, wie in Fig. 3 gezeigt, T-förmig oder wie in Fig. 2 gezeigt, L-förmig ausgebildet werden. Wesentlich ist, dass das Querschnittsprofil Q den Anlageschenkel 7 zur unmittelbaren Anlage des Wischerantriebs 33 sowie den einzigen ersten, sich in den ersten Raumabschnitt 12 erstreckenden, Stützschenkel 16 aufweist. Zusätzlich weist das Querschnittsprofil Q beim Ausführungsbeispiel gemäß Fig. 5 den zweiten, in den zweiten Raumabschnitt 13 ragenden Stützschenkel 27 auf.

## Patentansprüche

1. **Wischanlage (32) mit einem** Befestigungsrohr, **durch das ein Wischerantrieb (33) der Wischanlage (32) in einem Kraftfahrzeug fixiert wird,** mit einem Befestigungsabschnitt (6), dessen von Umfangswandabschnitten (17, 18, 19, 20, 29, 30) des Befestigungsrohres (1) gebildetes Querschnittsprofil (Q) einen, einen ersten Raumabschnitt (12) und einen zweiten Raumabschnitt (13) voneinander trennenden, mit mindestens einer Durchgangsöffnung (8, 9) zur Aufnahme einer Befestigungsschraube (40, 41) versehenen Anlageschenkel (7) aufweist, wobei der Wischerantrieb (33), vorzugsweise ein Wischerantriebsgehäuse (36), besonders bevorzugt ein Getriebegehäuseabschnitt (35) des Wischerantriebsgehäuses (36), unmittelbar am Anlageschenkel (7) anliegt,
wobei der Befestigungsabschnitt (6) einen sich auf dem Anlageschenkel (7) weg in den ersten Raumabschnitt (12) erstreckenden ersten Stützschenkel (16) aufweist, wobei der erste Stützschenkel (16) der einzige sich in den ersten Raumabschnitt (12) erstreckende Stützschenkel (16) ist, und ein zweiter, sich in den zweiten Raumabschnitt (13) erstreckender Stützschenkel (27) vorgesehen ist, **dadurch gekennzeichnet, dass die Umfangswandabschnitte (17, 18, 19, 20, 29, 30) derart angeordnet sind, dass von mindestens zwei der Umfangswandabschnitte (17, 18, 19, 20, 29, 30) mindestens eine sich in Längsrichtung des Befestigungsabschnitts (6) erstreckende Hohlkammer (22, 28) umschlossen ist.**

2. Wischanlage nach Anspruch 1,
**dadurch gekennzeichnet,**
**dass** der Anlageschenkel (7) und der erste Stützschenkel (16) zumindest näherungsweise rechtwinklig angeordnet sind.

3. Wischanlage nach einem der Ansprüche 1 oder 2,
**dadurch gekennzeichnet,**
**dass** das Querschnittsprofil (Q), zumindest näherungsweise, L-förmig konturiert ist.

4. Wischanlage nach Anspruch 1,
**dadurch gekennzeichnet,**
**dass** der zweite Stützschenkel (27), zumindest näherungsweise, rechtwinklig zum Anlageschenkel (7) angeordnet ist.

5. Wischanlage nach einem der Ansprüche 1 oder 4,
**dadurch gekennzeichnet,**
**dass** das Querschnittsprofil (Q), zumindest näherungsweise, T-förmig ausgebildet ist.

6. Wischanlage nach einem der Ansprüche 1 oder 4,
**dadurch gekennzeichnet,**
**dass** das Querschnittsprofil (Q), zumindest näherungsweise, Z-förmig ausgebildet ist.

7. Wischanlage nach Anspruch 1,
**dadurch gekennzeichnet,**
**dass** die Hohlkammer (22, 28) im Bereich eines Endes (14, 15) des Anlageschenkels (7) und/oder im Bereich eines Endes (21, 23) eines der Stützschenkel (16, 27) angeordnet ist.

## Claims

1. Wiping system (32) having a fastening tube, by way of which a wiper drive (33) of the wiping system (32) is fixed in a motor vehicle, having a fastening section (6), the cross-sectional profile (Q) of which, which is formed by circumferential wall sections (17, 18, 19, 20, 29, 30) of the fastening tube (1), has a bearing limb (7) which separates a first space section (12) and a second space section (13) from one another and is provided with at least one through opening (8, 9) for receiving a fastening bolt (40, 41), the wiper drive (33), preferably a wiper drive housing (36), particularly preferably a gear mechanism housing section (35) of the wiper drive housing (36) bearing directly against the bearing limb (7), the fastening section (6) having a first supporting limb (16) which extends on the bearing limb (7) away into the first space section (12), the first supporting limb (16) being the only supporting limb (16) which extends into the first space section (12), and a second supporting limb (27) which extends into the second space section (13) being provided, **characterized in that** the circumferential wall sections (17, 18, 19, 20, 29, 30) are arranged in such a way that, at least one hollow chamber (22, 28) which extends in the longitudinal direction of the fastening section (6) is enclosed by at least two of the circumferential wall sections (17, 18, 19, 20, 29, 30).

2. Wiping system according to Claim 1, **characterized in that** the bearing limb (7) and the first supporting limb (16) are arranged at least approximately at a right angle.

3. Wiping system according to either of Claims 1 and 2, **characterized in that** the cross-sectional profile (Q) is contoured at least approximately in an L-shaped manner.

4. Wiping system according to Claim 1, **characterized in that** the second supporting limb (27) is arranged at least approximately at a right angle with respect to the bearing limb (7).

5. Wiping system according to either of Claims 1 and 4, **characterized in that** the cross-sectional profile (Q) is of at least approximately T-shaped configuration.

6. Wiping system according to either of Claims 1 and 4, **characterized in that** the cross-sectional profile (Q) is of at least approximately Z-shaped configuration.

7. Wiping system according to Claim 1, **characterized in that** the hollow chamber (22, 28) is arranged in the region of one end (14, 15) of the bearing limb (7) and/or in the region of one end (21, 23) of one of the supporting limbs (16, 27).

## Revendications

1. Installation d'essuie-glace (32) comprenant un tube de fixation, par le biais duquel un entraînement d'essuie-glace (33) de l'installation d'essuie-glace (32) est fixé dans un véhicule automobile, comprenant une portion de fixation (6) dont le profil en section transversale (Q), formé par des portions de paroi périphérique (17, 18, 19, 20, 29, 30) du tube de fixation (1), présente une branche d'appui (7) séparant l'une de l'autre une première portion spatiale (12) et une deuxième portion spatiale (13), pourvue d'au moins une ouverture de passage (8, 9) pour recevoir une vis de fixation (40, 41), l'entraînement d'essuie-glace (33), de préférence un boîtier d'entraînement d'essuie-glace (36), particulièrement préférablement une portion de boîtier de transmission (35) du boîtier d'entraînement d'essuie-glace (36), s'appliquant directement contre la branche d'appui (7),
la portion de fixation (6) présentant une première branche de support (16) s'étendant à partir de la branche d'appui (7) dans la première portion spatiale (12), la première branche de support (16) étant la seule branche de support (16) s'étendant dans la première portion spatiale (12), et une deuxième branche de support (27) s'étendant dans la deuxième portion spatiale (13) étant prévue, **caractérisée en ce que** les portions de paroi périphérique (17, 18, 19, 20, 29, 30) sont disposées de telle sorte qu'au moins une chambre creuse (22, 28) s'étendant dans la direction longitudinale de la portion de fixation (6) soit entourée par au moins deux des portions de paroi périphérique (17, 18, 19, 20, 29, 30).

2. Installation d'essuie-glace selon la revendication 1,
**caractérisée en ce que**
la branche d'appui (7) et la première branche de support (16) sont disposées au moins approximativement à angle droit.

3. Installation d'essuie-glace selon l'une quelconque des revendications 1 ou 2,
**caractérisée en ce que**
le profil en section transversale (Q) présente un contour au moins approximativement en forme de L.

4. Installation d'essuie-glace selon la revendication 1,
**caractérisée en ce que**
la deuxième branche de support (27) est disposée au moins approximativement à angle droit par rapport à la branche d'appui (7).

5. Installation d'essuie-glace selon l'une quelconque des revendications 1 ou 4, **caractérisée en ce que** le profil en section transversale (Q) est réalisé au moins approximativement en forme de T.

6. Installation d'essuie-glace selon l'une quelconque des revendications 1 ou 4,
**caractérisée en ce que**
le profil en section transversale (Q) est réalisé au moins approximativement en forme de Z.

7. Installation d'essuie-glace selon la revendication 1,
**caractérisée en ce que**
la chambre creuse (22, 28) est disposée dans la région d'une extrémité (14, 15) de la branche d'appui (7) et/ou dans la région d'extrémité (21, 23) de l'une des branches de support (16, 27).
